# EUROPEAN PATENT SPECIFICATION

(11) **EP 0 824 455 B1**
(45) Date of publication and mention of the grant of the patent: **01.09.1999**
(21) Application number: 96913560.7
(22) Date of filing: 09.05.1996
(51) Int. Cl.: B65B 35/56

(54) **APPARATUS AND METHOD FOR SIMULTANEOUS TRANSFER OF SEVERAL OBJECTS FROM AN ORIGINAL POSITION TO A DESIRED NEW POSITION**
VORRICHTUNG UND VERFAHREN ZUR GLEICHZEIIGEN ÜBERGABE VON MEHREREN GEGENSTÄNDEN VON EINER ISTPOSITION ZU EINER SOLLPOSITION
DISPOSITIF ET PROCEDE PERMETTANT DE TRANSFERER SIMULTANEMENT PLUSIEURS OBJETS D'UNE POSITION D'ORIGINE A UNE NOUVELLE POSITION SOUHAITEE

(30) Priority: 10.05.1995 FI 952263; 22.06.1995 FI 953132
(43) Date of publication of application: 25.02.1998
(73) Proprietor: CAD-Tekniikka OY, 12400 Tervakoski (FI)
(72) Inventor: VÄRE, Erkki, FIN-11710 Riihimäki (FI)
(74) Representative: Heinonen, Keijo Gunnar
(86) International application number: FI9600263
(87) International publication number: WO9635616

(56) References cited:
- DE-A- 3 928 055
- DERWENT'S ABSTRACT, No. A2082K/01, Week 8301; & SU,A,905 142 (ROSPISHCHEPROMAVTOM), 25 February 1982.

## Description

The subject invention relates to packaging technique. More specifically, the objective of the subject invention is an apparatus according to the characteristic part of claim 1 for simultaneous transfer of several objects from an original position to a desired new position, preferably on a level.

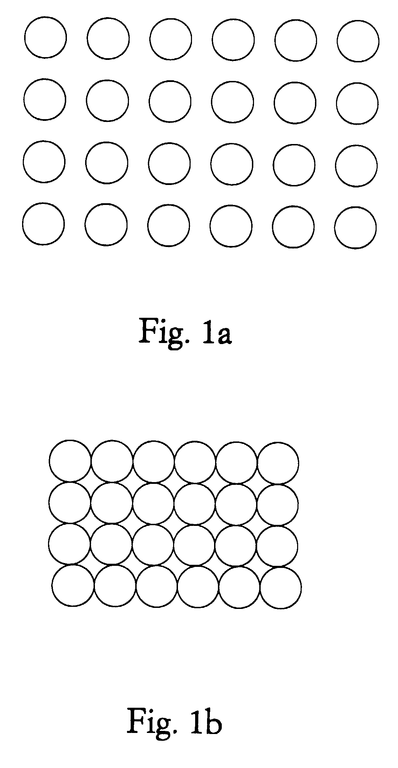

Handling of different packages can create a situation where the objects after manufacture or after filling are in an order a according to Fig. 1. In order to move the objects from this position into a tight form to be e.g. packed close together in a box of a certain size, they have to be put in order b. The aim is generally to fit in as much goods as possible in one package.

When studying the transfer of the objects from order a of Fig. 1 to order b, it can be noticed that each object has to move a different distance and most objects are moreover moved in two directions. As a result of this the transfer mechanisms of the objects relate badly to each other, i.e. the transfer requires for almost each object a transfer mechanism both in y and x direction.

According to presently known technique, such a transfer is generally implemented using a great amount of power units, such as pneumatic cylinders or step motors, so that each object to be moved, such as a product package or alike, has its own power unit or power unit assembly to enforce the desired movement and the object matrix/matrices to orientate into desired form. Such an arrangement is naturally easily subject to malfunction, and is also expensive and inaccurate, as the different cylinders or engines have their tolerances and all transfers are made independent of each other.

The primary objective of the subject invention is to eliminate the above disadvantages and weaknesses of previously known methods and to provide a new apparatus for simultaneous transfer of several objects from an original position to a desired new position.

This objective is achieved with an apparatus, the characteristics of which are presented in the claim 1.

The invention is based on the new and genius basic concept that the apparatus with one motion, produced by e.g. a pneumatic cylinder, implements the transfer of all the objects simultaneously.

The above mentioned transfer can be implemented with the subject invention using only one transfer unit so that the transfer of all the objects is mechanically controlled and combined with each other, providing a better accuracy than with traditional methods.

One preferable form of embodiment to implement the transfer according to Fig. 1 is described more in detail below with reference to the enclosed drawings, in which

Fig. 1a and b present the objects to be gripped scattered and packed.

Fig. 2 gives an overall side view of the apparatus according to the invention gripping the object to be moved.

Fig. 3 presents two plate means of the apparatus according to the invention.

Fig. 4 presents the plate means according to Fig. 3 arranged in a pack in initial position, i.e. a, when the objects to be moved are still unmoved, and in final position, i.e. b, when the objects to be moved have been moved.

Fig. 5 presents another preferable form of embodiment of the invention, in which the plate pack is formed of three overlapping plate means, in initial position and final position.

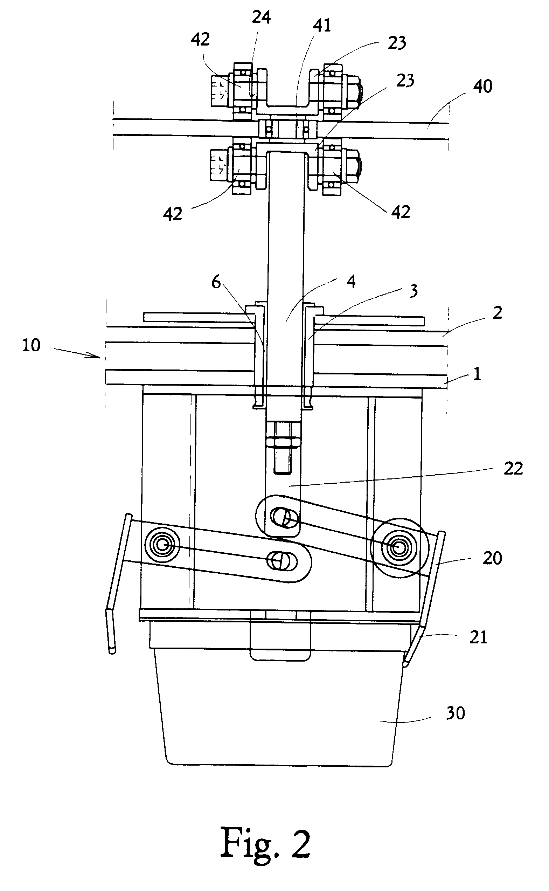

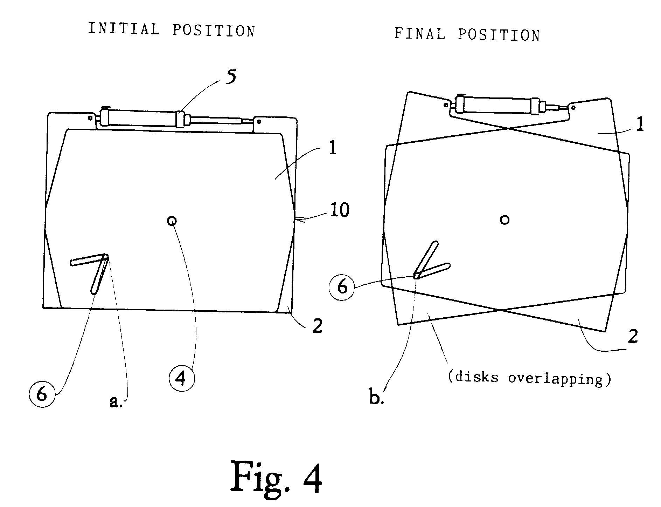

As shown in Fig. 2, the subject apparatus for the transfer of several objects simultaneously on a level from an original position to a desired new position comprises:
- a plate pack 10, comprising plate means 1 and 2 which are parallel in relation to each other and turnable around one common rotation axis 4,
- gripping means 20 for each object 30 to be moved, which gripping means 20 are supported from above the plate pack or from its top surface,
- power or transfer units 5 (presented in Fig. 4) to turn the plate pack plate means 1 and 2 in relation to each other;
by which the edges of the intersecting or partly matching grooves and/or openings 3 in the plate pack plate means 1 and 2, which are turnable in relation to each other, encompass the passages 6 extending through the plate pack and going through the gripping means 20, which each passage moves on the plate pack 10 level along with the turning of the plate means in relation to each other, and which each acts as the control device of the gripping means 20 going through the same.

In the embodiment according to Fig. 2, the apparatus is designed for the transfer of round objects 30 on a level. The objects can also be of different shapes, e.g. angular. For the gripping of the objects, the gripping means 20 are provided with a gripping head 21, having claw, jaw, suction etc. means, an arm portion 22 to support the gripping means 20 from above the plate pack 10 or from its top surface. One gripping head 21 is shown in Fig. 2 in open position and the other one in gripping position, thus presenting the motion of the arm portion 22 in the extreme positions of the gripping head 21. In the actual embodiment, both gripping heads are simultaneously either in open position or in gripping position. The transfer unit is generally placed on the conveyor. The conveyor, which is not presented, brings the objects apart from each other in defined areas to below the transfer unit, the transfer unit grips the objects and transfers them to the desired position, the grip on the objects is opened or released and the conveyor transfers the objects moved to the desired position from beneath the transfer unit, whereafter the next objects are transferred by the conveyor to underneath the transfer unit. The transfer unit can be made to transfer also in the opposite direction.

The design of the gripping head 21 or the support of the gripping means 20, which are generally known technique, are not essential for the invention. It should, however, be noticed that the gripping means 20 should preferably be supported in an upper support plate 40. In the preferable embodiment presented in Fig. 2, the arm portion 22 extends through an opening 41 in the support plate 40, and the upper part of the arm portion 22 is provided with a lug 23 having a pivoted support shaft 24, and the heads of the support shaft are accommodated into bearings 42 mounted in the support plate 40, making the gripping means 20 turn as a lever around their support shaft 24 along with the turning of the plate pack plate means in relation to each other mechanically controlled by the moving passage. A corresponding pivoting can naturally also be arranged on the top surface of the uppermost plate means of the plate pack 10, by which the gripping means 20 turn in the same way along with the turning of the plate pack 10 plate means 1 and 2 in relation to each other mechanically controlled by the moving passage 6.

Instead of accommodating in bearings 42, the support shaft 24 can alternatively be provided in its both ends with support wheels or support reels (not shown), enabling the fixing and/or support means 20, maintaining essentially their orientation, to move on their support wheels or support reels along the elongated opening 41 in the support plate 40, or according to the path defined by the moving passages 6 formed by the intersecting openings 3 along with the turning of the plate pack 10 plates 1 and 2. When the objects 30 to be transferred are cylindrical and intended to be moved close together, it is essential, especially when using support wheels or support reels and when the grip head 21 is provided with jaws or claws or alike, that the jaws or the claws do not touch each other but are positioned on the periphery of the cylindrical object in the empty spaces between the cylindrical objects after having transferred them close together. The unintentional turning or winding of the arm 22 around its longitudinal axis can be prevented so that the cross profile of the arm 22 moving in the support plate 40 opening 41 is not of circular shape but e.g. polygonal or cylindrical, or the support wheels or support reels can alternatively be provided with path limiting back stops.

The vertical motion of the grip head 21 provided with grip jaws or grip claws and the subsequent gripping and releasing function presented in Fig. 2 are embodied:
- either by declining, preferably elevating and/or lowering mechanically, pneumatically and/or hydraulically the support plate 40 or the plate pack 10, if the support of the gripping means is arranged in the plate pack, or
   by using mechanically, pneumatically and/or hydraulically the grip head actuators in the gripping means 20.
   Suitable actuators can be used to move the support plate 40 or the plate pack 10, as e.g. different elevating screws and pneumatic and/or hydraulic power devices (not presented). The moving of the support plate 40/plate pack 10 or the mechanical, pneumatical and/or hydraulical operation of the grip head 21 actuators thus produces the gripping action of the grip head 21, which is a jaw, claw, or suction grip, or alike, and the release action, opening or releasing the jaw, claw or suction grip, or alike.

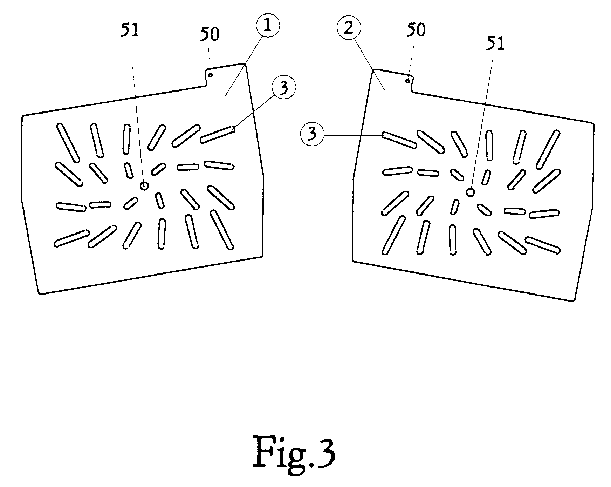

Reference is made to Fig. 3. The plate pack 10, forming the basis for the apparatus, comprises at least two parallel plates 1 and 2 which are movable in relation to each other. The plates are provided with grooves 3 based on accurate calculations of the desired transfer distances and directions of the objects.

The plates are also provided with bores 51, from which they are jointed with an axle into a plate pack, having at least two in relation to each other moving plates. The plates are also provided with bores 50, lugs or corresponding for the fixing of the power or transfer unit 5, such as e.g. a pneumatic cylinder, or alike.

The plates are placed on top of each according to Fig. 4 and pivoted on the same axis 4 through the bores 51. The position, angles and lengths of the elongated openings or grooves 3 are calculated so that the corresponding openings or grooves 3 of both plates intersect forming the passages 6 going through the plate pack 10 plates 1 and 2, through which passages the arm portions 22 of the gripping means 20 are taken according to Fig. 1. In one favorable form of embodiment of the invention, the plates moving in relation to each other are both to their shape and grooving identical, but accommodated into the apparatus according to the invention the plate bores, lugs, or corresponding for the power or transfer unit 5 are placed in the opposite ends of the plate pack leaving the power or transfer unit 5 between them.

Reference is made to Fig. 4. When the plates 1 and 2 are turned around the axis 4 in relation to each other by e.g. a pneumatic cylinder, the opposite, i.e. the convergence points of the intersecting openings or grooves 3 are moved, which simultaneously moves the passage 6, i.e. the convergence point of the openings or grooves 3, and the moving passage moves the gripping means going through it from an initial position a to a final position b.

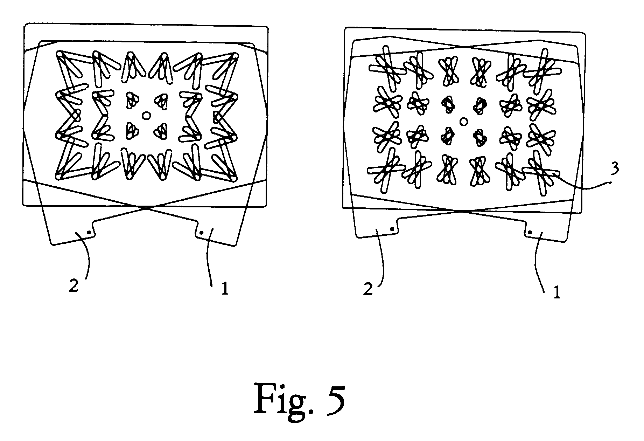

Reference is made to Fig. 5. The construction can be made more appropriate by increasing the amount of transfer plates 1 and 2 to three, so that the lower and upper transfer plate in the plate pack are identically grooved. This improvement provides a symmetric structure, compensating the bending forces on the arm portion 22 of the gripping means during the transfer. I should be noticed that the point bending and/or moment load on the arm portion 22 can be further reduced by increasing the amount of plates, providing a solution with several plates moving in relation to each other instead the single plates of one pair of plates.

To improve the accuracy of the transfer and/or prevent the rotation of the gripping means around its axis during the transfer, a special control plate (Fig. 5) can be used on top of the above mentioned transfer plates. The control plate is thus grooved so that each groove corresponds to the moving of the arm portion 22 of the corresponding gripping means 20.

It has been established that the favorable plate 1, 2 material is plastic, e.g. Hs-polyethene, which is slippery and abrasion resistant. The plate pack 10 plate as well as the optional control plate and the upper support plate 40 can e.g. be made of stainless steel.

There are naturally several forms of embodiment of the subject invention within the scope of the claims. The essential point is that the desired transfer is implemented by the movement between two overlapping plates, by which the reciprocal movement of the opposite grooves formed in the plates produces the movement of the object in the opposite grooves.

Consequently, at least two overlapping plates through which passes a common rotation axis, in relation to which the plates are turnable, and which plates are supported in a certain reciprocal relation, in which construction passages are provided through the plates, through which each overlapping passage has been placed a common movably supported axle, which moves when the plates are moved in relation to each other in the direction caused by the reciprocal movement of the plate passages between two positions, in one of which the axles going through the passages are further away from the rotation axis and in the other one closer to the rotation axis.

A method for moving at least two overlapping plates around a common rotation axis going through them, the plates being supported in a certain reciprocal relation, so that the plates are moved in relation to each other in the direction caused by the reciprocal movement of the plate passages between two positions, in one of which the axles going through the passages are further away from the rotation axis and in the other one, which is closer to the rotation axis, passages are provided through the plates, through which each overlapping passage is placed a common movably supported axle which moves when the plates are moved in relation to each other.

## Claims

1. An apparatus for simultaneous transfer of several objects from an original position to a desired new position,
**characterized** in that it comprises:
- a plate pack (10) formed by plates (1, 2) which are parallel in relation to each other and turnable around one common rotation axis (4),
- power or transfer units (5) to turn the plate pack plates (1, 2) in relation to each other,
- gripping means (20) for each object (30) to be moved,
and in that the edges of the intersecting or partly matching grooves and/or openings (3) in the plates (1,2) encompass passages (6) extending through the plate pack (10) and enclose around the gripping means (20), wherein each passage moves along with the turning of the plates (1, 2) relative to each other, and each passage (6) acts on the gripping means (20) extending through the same, whereby the passages operate mechanically controlled by the movement of the gripping means (20) and thereby move the gripping means a desired distance in the desired direction.

2. An apparatus according to claim 1, **characterized** in that the passage (6) corresponds in its interior dimensions essentially with the exterior dimensions of the portion of the gripping means that passes through the plate pack (10).

3. An apparatus according to claim 1, **characterized** in that the amount of said plates furnished with the openings (3) or grooves are two.

4. An apparatus according to claim 1, **characterized** in that the amount of said plates (1,2) furnished with openings (3) or grooves are three overlapping pieces, the lower and the upper ones moving with identical grooving which intersect the matching openings (3) or grooves in the intermediate plate.

5. An apparatus according to claim 3 or 4, **characterized** in that a support plate is provided on top of said plates (1, 2), which is grooved according to each desired movement of the gripping means.

6. An apparatus according to claim 1, **characterized** in that the plates (1, 2) are essentially level plates, the turning of which in relation to each other around an axis (4) is implemented with a pneumatic cylinder.

7. An apparatus according to one of the claims 1 - 6, **characterized** in that the level plates are of plastic.

8. An apparatus according to one of the claims 1 - 7, **characterized** in that the gripping means (20) comprise a grip head (21) gripping the object (30) and an arm portion (22) to support the gripping means (20) from above the plate pack (10) or from its top level.

9. An apparatus according to claim 8, **characterized** in that the gripping means (20) are suspended by means of the support shaft (24) in the upper part of the arm portion so that the gripping means (20) turn like levers around their support shaft (24) along with the turning of the plate means (1,2) in relation to each other mechanically controlled by the moving passage.

10. An apparatus according to claim 8, **characterized** in that the gripping means (20) are suspended by means of support wheels or support reels accommodated in the support shaft (24) in the upper part of the arm portion, so that the gripping means (20) move, maintaining their position, along with the turning of the plate pack plate means (1,2) in relation to each other mechanically controlled by the moving passage.

## Patentansprüche

1. Gerät für den gleichzeitigen Übergang von mehreren Objekten von ein Ursprungsposition zu einer gewünschten neuen Position, gekennzeichnet durch:
- einen Plattenstapel (10), der durch Platten (1, 2) gebildet ist, die parallel zueinander sind und um eine gemeinsame Drehachse (4) drehbar sind,
- Antriebs- oder Übertragungseinheiten (5) zum Drehen der Platten (1, 2) des Plattenstapels in Bezug zueinander,
- ein Greifmittel (20) für jedes zu bewegende Objekt (30),
und dadurch gekennzeichnet,
daß die Kanten der sich schneidenden oder teilweise zueinander gehörenden Rillen und/oder Öffnungen (3) in den Platten (1, 2) sich durch den Plattenstapel (10) erstreckende Durchgänge (6) umgreifen und das Greifmittel (20) einschließen, worin sich jeder Durchgang zusammen mit dem Drehen der Platten (1, 2) relativ zueinander bewegt und jeder Durchgang (6) auf das sich durch denselben erstreckende Greifmittel (20) wirkt, wodurch die Durchgänge mechanisch gesteuert durch die Bewegung des Greifmittels (20) tätig sind und wodurch das Greifmittel um eine gewünschte Entfernung in der gewünschten Richtung bewegt wird.

2. Gerät nach Anspruch 1, dadurch gekennzeichnet, daß der Durchgang (6) in seinen inneren Abmessungen im wesentlichen den äußeren Abmessungen des Abschnittes des Greifmittels entspricht, das durch den Plattenstapel (10) geht.

3. Gerät nach Anspruch 1, dadurch gekennzeichnet, daß die Menge der Platten, die mit den Öffnungen (3) oder Rillen versehen sind, zwei sind.

4. Gerät nach Anspruch 1, dadurch gekennzeichnet, daß die Menge der Platten (1, 2), die mit den Öffnungen (3) oder Rillen versehen sind, drei überlappende Stücke sind, wobei die obere und die untere sich simultan bewegen mit identischen Rillen, die die zugehörigen Öffnungen (3) oder Rillen in der mittleren Platte schneiden.

5. Gerät nach Anspruch 3 oder 4, dadurch gekennzeichnet, daß eine Tragplatte oben auf den Platten (1, 2) vorgesehen ist, die gemäß jeder gewünschten Bewegung des Greifmittels gerillt ist.

6. Gerät nach Anspruch 1, dadurch gekennzeichnet, daß die Platten (1, 2) im wesentlichen horizontale Platten sind, deren Drehung in Bezug zueinander um eine Achse (4) durch einen Pneumatikzylinder realisiert wird.

7. Gerät nach einem der Ansprüche 1 bis 6, dadurch gekennzeichnet, daß die ebenen Platten aus Kunststoff sind.

8. Gerät nach einem der Ansprüche 1 bis 7, dadurch gekennzeichnet, daß das Greifmittel (20) einen das Objekt (30) greifenden Greifkopf (21) und einen Armabschnitt (22) zum Lagern des Greifmittels (20) von oberhalb des Plattenstapels (10) oder von seiner oberen Ebene aufweist.

9. Gerät nach Anspruch 8, dadurch gekennzeichnet, daß das Greifmittel (20) durch ein Mittel der Tragwelle (24) in dem obe ren Teil des Armabschnittes so aufgehängt ist, daß sich das Greifmittel (20) wie ein Hebel um die Tragwelle (24) zusammen mit dem Drehen des Plattenmittels (1, 2) in Bezug aufeinander mechanisch gesteuert durch den bewegenden Durchgang dreht.

10. Gerät nach Anspruch 8, dadurch gekennzeichnet, daß das Greifmittel (20) mittels von Tragrädern oder Stützrädern aufgehängt ist, die in der Tragwelle (24) in dem oberen Abschnitt des Armabschnittes aufgenommen sind, so daß sich das Greifmittel (20) unter Beibehaltung der Position zusammen mit dem Drehen des Plattenmittels (1, 2) des Plattenstapels in Bezug zueinander mechanisch gesteuert durch den sich bewegenden Durchgang bewegt.

## Revendications

1. Appareil pour transférer en même temps plusieurs objets d'une position initiale à une nouvelle position désirée, caractérisé en ce qu'il comprend :
- un assemblage de plaques (10) formé par des plaques (1,2) qui sont parallèles les unes aux autres et aptes à pivoter autour d'un axe commun (4),
- des groupes moteur ou unités de transfert (5) pour faire pivoter les plaques (1,2) de l'assemblage de plaques les unes par rapport aux autres,
- des moyens de préhension (20) pour chaque objet (30) à déplacer,
et en ce que les bords des rainures et/ou ouvertures (3), qui s'entrecroisent ou se recouvrent partiellement dans les plaques (1,2), comprennent des passages (6) qui s'étendent à travers l'assemblage des plaques (10) et entourent les moyens de préhension (20), dans lesquels chaque passage se déplace avec le pivotement relatif des plaques (1,2) les unes par rapport aux autres, et chaque passage (6) agit sur les moyens de préhension (20) s'étendant à travers lui même, ce par quoi les passages opèrent contrôlés de façon mécanique par les mouvements des moyens de préhension (20) et déplacent ainsi les moyens de préhension (20) d'une distance désirée dans la direction désirée.

2. Appareil selon la revendication 1, caractérisé en ce que les cotes intérieures du passage (6) correspondent essentiellement aux cotes extérieures de la partie des moyens de préhension qui traverse l'assemblage de plaques (10).

3. Appareil selon la revendication 1, caractérisé en ce que le nombre desdites plaques équipées d'ouvertures ou rainures (3) est de deux.

4. Appareil selon la revendication 1, caractérisé en ce que le nombre desdites plaques (1,2) équipées d'ouvertures ou rainures (3) est de trois pièces se chevauchant, celles situées en partie inférieure et supérieure se déplaçant simultanément avec une rainurage identique qui s'entrecroise avec les ouvertures ou rainures complémentaires (3) dans la plaque intermédiaire.

5. Appareil selon la revendication 3 ou 4, caractérisé en ce qu'il est prévu une plaque de support au sommet desdites plaques (1,2) qui est cannelée selon chaque déplacement désiré des moyens de préhension.

6. Appareil selon la revendication 1, caractérisé en ce que les plaques (1,2) sont essentiellement des plaques de niveau, dont le pivotement les unes par rapport aux autres autour d'un axe (4) est réalisé au moyen d'un cylindre pneumatique.

7. Appareil selon l'une des revendications 1 à 6, caractérisé en ce que les plaques de niveau sont en plastique.

8. Appareil selon l'une des revendications 1 à 7, caractérisé en ce que les moyens de préhension (20) comprennent une tête de préhension (21) pour saisir l'objet (30) et une partie d'un bras (22) pour supporter les moyens de préhension (20) à partir de la partie supérieure de l'assemblage de plaques (10) ou à partir de son niveau le plus élevé.

9. Appareil selon la revendication 8, caractérisé en ce que les moyens de préhension (20) sont suspendus au moyen de l'arbre de support (24) dans la partie supérieure de la partie de bras de sorte que les moyens de préhension (20), pivotent comme des leviers autour de leur arbre de support (24) avec le pivotement des moyens de plaques (1,2), les unes par rapport aux autres contrôlé de façon mécanique par le passage en mouvement.

10. Appareil selon la revendication 8, caractérisé en ce que les moyens de préhension (20) sont suspendus au moyen de roues ou tambours de support disposés dans l'arbre de support (24) dans la partie supérieure de la partie de bras de sorte que les moyens de préhension (20) se déplacent, en conservant leur position avec le pivotement des moyens de plaques de l'assemblage de plaques (1,2) les uns par rapport aux autres contrôlé par le passage en mouvement.
